# EUROPÄISCHE PATENTSCHRIFT

(11) **EP 3 304 422 B1**
(45) Veröffentlichungstag und Bekanntmachung des Hinweises auf die Patenterteilung: **20.11.2024**
(21) Anmeldenummer: 16745610.2
(22) Anmeldetag: 20.05.2016
(51) Int. Cl.: B42D 25/382, B42D 25/30, G07D 7/00

(54) **VERFAHREN ZUR FÄLSCHUNGSERKENNUNG VON IDENTIFIKATIONSDOKUMENTEN, DIE DATENFELDER MIT IR-ABSORBIERENDEN PERSONALISIERTEN DATEN ENTHALTEN**
DETECTING COUNTERFEIT IDENTITY DOCUMENTS, WHERE IR-ABSORBING DATA FIELDS CONTAIN PERSONALIZED DATA
DÉTECTION DE FALSIFICATION DE DOCUMENT D'IDENTITE, OU LES DONNEES PERSONNALISEES ABSORBANT LE RAYONNEMENT IR

(30) Priorität: 28.05.2015 DE 102015108429
(43) Veröffentlichungstag der Anmeldung: 11.04.2018
(73) Patentinhaber: Bundesdruckerei GmbH, 10969 Berlin (DE)
(72) Erfinder: RACH, Andreas, 10119 Berlin (DE); MAGGIONI, Christoph, 10961 Berlin (DE)
(74) Vertreter: Bittner, Thomas L.
(86) Internationale Anmeldenummer: PCT/DE2016/100231
(87) Internationale Veröffentlichungsnummer: WO 2016/188513

(56) Entgegenhaltungen:
- EP-A1- 1 437 692
- EP-A1- 2 830 024
- EP-A2- 0 342 601
- JP-A- 2012 098 905

## Beschreibung

Die Erfindung betrifft ein Verfahren zur Fälschungserkennung von Identifikationsdokumenten, die Datenfelder mit IR-absorbierenden personalisierten Daten enthalten, sowie ein dazugehöriges Computerprogramm oder computerlesbares Speichermedium.

### Technologischer Hintergrund

Identifikationsdokumente, wie beispielsweise Personaldokumente, Zutrittskontrollausweise, Kraftfahrzeugdokumente und Visa, weisen in der Regel definierte Sicherheitsmerkmale auf, die das Fälschen erschweren oder gar unmöglich machen sollen. Generell lassen kann man zwischen optischen, haptischen und akustischen Sicherheitsmerkmalen unterscheiden. Die nachfolgend noch näher erläuterte erfindungsgemäße Fälschungserkennung betrifft nur Identifikationsdokumente, die ein spezielles optisches Sicherheitsmerkmal aufweisen.

Bei optischen Sicherheitsmerkmalen von Identifikationsdokumenten kann ferner zwischen Sicherheitsmerkmalen unterschieden werden, die im sichtbaren Bereich für den Menschen erkennbar sind, und Sicherheitsmerkmalen, die erst durch zusätzliche technische Maßnahmen sichtbar werden. Letztere umfassen Sicherheitsmerkmale, die mittels Infrarotlicht auslesbar sind.

Es ist ferner bekannt, in den Identifikationsdokumenten in vorgesehenen Datenfeldern nicht nur unmittelbar lesbare, personalisierte Daten abzulegen, sondern auch (gleichartige) Daten in unter Infrarotlicht lesbarer Form dort abzuspeichern. So sind beispielsweise Tinten entwickelt worden, die IR-absorbierende Pigmente enthalten. In einem solchen Fall wäre also das Zeichen sowohl im sichtbaren Bereich als auch unter Infrarotlicht sichtbar. Eine weitere Möglichkeit der Erzeugung von unter Infrarotlicht sichtbaren Merkmalen beispielsweise in Kartendokumenten ist die Laserstrahlgravur. Durch die Laserbestrahlung entstehen Verbrennungen, deren schwarze Rußpartikel IR-absorbierend und dadurch auch unter Infrarotlicht sichtbar sind.

Im Zuge der Erkennung von Fälschungen ist ferner bekannt, dass ein völliges Fehlen von IR-absorbierenden personalisierten Daten als Indiz für eine Fälschung gedeutet werden kann. Mit anderen Worten, sind bei einem Identifikationsdokument personalisierte Daten unter Infrarotlicht sichtbar, so genügt in der Regel dieser Umstand gänzlich, um eine Fälschung auszuschließen, auch wenn tatsächlich das sichtbare Datenfeld verklebt oder überdruckt wurde und einen gefälschten, abweichenden Inhalt zeigt.

Es besteht daher anhaltender Bedarf nach einem verbesserten Verfahren zur Erkennung von Fälschungen bei Datenfeldern, die neben sichtbaren Daten IR-absorbierende Daten enthalten. Insbesondere sollen Fälschungen erkennbar sein, die entstehen, wenn das betreffende Datenfeld mit einem zusätzlichen IR-absorbierenden personalisierten Datensatz bedruckt oder überklebt wird.

Das Dokument EP 2 830 024 A1 offenbart ein System zum Lesen einer Papierblatt-Seriennummer, zum Lesen einer Seriennummer, die einem Papierblatt zugeordnet ist, unter Verwendung eines Papierblattbildes, mit: einer Papierblatt-Identifikationssensoreinheit zum Erfassen eines Papierblattbildes und zum Identifizieren eines Typs des Papierblattes unter Verwendung des Papierblattbildes; einer Speichereinheit, in der eine Nummernextraktionsbedingung, die Positionsinformationen einer Vielzahl von Seriennummern enthält, die in dem Papierblattbild enthalten sind, und Zeichenschriftart-Identifikationsinformationen, die Informationen bezüglich einer Schriftart und Zeichenart jeder Seriennummer enthalten, mit dem Typ des Papierblattes assoziiert und gespeichert sind.

Das Dokument EP 1 437 692 A1 ist auf eine Vorrichtung gerichtet, die einen Seriennummernleseteil mit zwei Lichtquellen mit unterschiedlichen Emissionsfarben und einen Bildsensor aufweist. Ein Stückelungserkennungsabschnitt identifiziert die Stückelung und die Transportrichtung eines Geldscheins auf einem Transportweg. Eine Steuereinheit steuert die Lichtquellen auf der Grundlage der identifizierten Informationen selektiv an und steuert den Abschnitt zum Scannen und Lesen eines Geldscheinteils. Die Geldscheine, deren Nennwert nicht erkannt werden kann, werden an einen Rückweisungsabschnitt geschickt.

### Zusammenfassung der Erfindung

Mit Hilfe des erfindungsgemäßen Verfahrens, wie definiert in Anspruch 1, zur Fälschungserkennung von Identifikationsdokumenten, die Datenfelder mit IR-absorbierenden personalisierten Daten enthalten, werden die geschilderten Mängel des Standes der Technik behoben oder zumindest gemindert. Das Verfahren umfasst dazu die Schritte:
(i) Auslesen eines Datenfeldes, das einen IR-absorbierenden personalisierten Datensatz enthält, mit einem IR-Lesegerät;
(ii) Bestimmen einer Anzahl alphanumerischer Zeichen im ausgelesenen Datenfeld in einer Auswerteeinheit; und
(iii) Bereitstellen eines Erwartungswerts für das Datenfeld, das den IR-absorbierenden personalisierten Datensatz enthält, in der Auswerteeinheit, wobei
   - der Erwartungswert in Abhängigkeit von einer vorgegebenen Anzahl an Zeichen, die im Datenfeld zu erwarten sind, festgelegt ist oder
   - zusätzlich eine Länge des ausgelesenen Datenfeldes bestimmt wird und anhand der Länge und einer vorgegebenen durchschnittlichen Zeichengröße eine maximale Anzahl an Zeichen berechnet wird, die im Datenfeld zu erwarten sind, und der Erwartungswert in Abhängigkeit von der berechneten maximalen Anzahl der Zeichen festgelegt ist;
(iv) Vergleich der bestimmten Anzahl an Zeichen mit dem Erwartungswert für dieses Datenfeld in der Auswerteeinheit und, für den Fall, dass die Anzahl der Zeichen den Erwartungswert überschreitet, Erzeugen eines Prüfsignals.

Der Erfindung liegt die Erkenntnis zugrunde, dass neben der gefälschten IR-Personalisierung nach wie vor die originale IR-Personalisierung erscheint, wenn das entsprechende Datenfeld überdruckt oder überklebt wird. Eine reine Prüfung auf Vorhandensein von IR-Absorption würde in einem solchen Fall als nicht auffällig befunden werden. Die kompakte und damit wenig fehleranfällige erfindungsgemäße Routine nutzt jedoch die aus dem originalen und gefälschten Datensatz erfassten IR-Daten zur Fälschungserkennung.

Unter "IR-absorbierend" wird vorliegend insbesondere der Umstand verstanden, das IR-absorbierende Bereiche in einer Aufnahme unter IR-Licht dunkel oder schwarz erscheinen und per Bildverarbeitung erkannt und ausgewertet werden können. Demgegenüber erscheinen Bereiche, die nicht mit IR-absorbierenden Farben und/oder Pigmenten gedruckt wurden, transparent bei Bestrahlung mit IR-Licht.

In einem ersten Schritt (i) wird dazu ein Datenfeld, das den IR-absorbierenden personalisierten Datensatz enthält, mit einem IR-Lesegerät ausgelesen. Derartige IR-Lesegeräte zur Erfassung von Daten aus Datenfeldern von Identifikationsdokumenten sind hinlänglich aus dem Stand der Technik bekannt, so dass an dieser Stelle auf ein näheres Eingehen verzichtet wird. Auch die Zuordnung von Daten auf einzelne Datenfelder eines Identifikationsdokumentes ist jahrzehntelange Praxis. So kann beispielsweise das Datenfeld bibliographische Angaben, wie Vor- und Nachnamen der Person, oder Datumsangaben, wie Ausstelldatum, Gültigkeitsdatum, Geburtsdatum oder dergleichen enthalten.

Nachfolgend wird gemäß dem erfindungsgemäßen Verfahren eine Anzahl alphanumerischer Zeichen im ausgelesenen Datenfeld in einer Auswerteeinheit ermittelt. Alphanumerische Zeichen umfassen, wie allgemein bekannt, Buchstaben und Ziffern. Zur Identifikation der einzelnen alphanumerischen Zeichen kann auf bekannte Routinen zur Texterkennung (englisch: optical character recognation OCR) zurückgegriffen werden. Im Vordergrund steht dabei nicht, den Sinngehalt des einzelnen Zeichens oder der Zeichenkombination korrekt zur erfassen, sondern vielmehr schlicht die Anzahl der überhaupt erkannten Zeichen zu bestimmen. Dementsprechend schlank kann die dazugehörige Identifikationsroutine ausgelegt sein.

Im Schritt (iii) wird nun ein Erwartungswert für das Datenfeld, das den IR-absorbierenden personalisierten Datensatz enthält, in der Auswerteeinheit bereitgestellt. Der Erwartungswert kann dabei in unterschiedlicher Weise bestimmt werden. Zum einen kann er schlicht in Abhängigkeit von einer vorgegebenen Anzahl an Zeichen, die im Datenfeld zu erwarten sind, festgelegt werden. Mit anderen Worten, enthält das Datenfeld üblicherweise eine genau festgelegte Anzahl von Zeichen, zum Beispiel einen 10-stelligen Code, so wird der Erwartungswert für die Anzahl der Zeichen 10 sein. Nach einer bevorzugten Variante des Verfahrens ist das auszulesende Datenfeld ein Datumsfeld und der festgelegte Erwartungswert aus Schritt (iii) ist 8.

Auch für reine Textfelder kann (gegebenenfalls noch ergänzen zu der nachfolgend noch näher erläuterten Bestimmung der maximalen Anzahl der Zeichen) ebenfalls ein fester Erwartungswert vorgegeben werden, wenn zum Beispiel das Datenfeld auf eine bestimmte Anzahl von Zeichen beschränkt ist. Kann das Datenfeld beispielsweise nur bis zu 30 Buchstaben enthalten, könnte der Erwartungswert für das Datenfeld 30 betragen.

Eine weitere Variante zur Bestimmung des Erwartungswerts sieht vor, dass zusätzlich eine Länge des ausgelesenen Datenfeldes bestimmt wird. Anhand der Länge und einer vorgegebenen durchschnittlichen Zeichengröße kann nun eine maximale Anzahl an Zeichen berechnet werden, die in dem ausgelesenen Datenfeld zu erwarten sind. Der Erwartungswert wird nun in Abhängigkeit von der berechneten maximalen Anzahl der Zeichen festgelegt und entspricht in der Regel dieser Anzahl. Die vorgegebene durchschnittliche Zeichengröße ist abhängig von dem jeweils verwendeten Schrifttyp als zum Beispiel Arial 11 oder Times New Roman 10 und ist für die meisten Identifikationsdokumente starr vorgegeben. Gegebenenfalls kann Schrifttyp und Schriftgröße mit üblichen Texterkennungsprogrammen in einfacher Weise bestimmt werden. Die geschilderte Variante ist besonders bevorzugt, wenn das Datenfeld ein Namensfeld ist, wobei der Erwartungswert dann der ermittelten maximalen Anzahl an Zeichen entspricht.

Schließlich wird im Schritt (iv) ein Vergleich der bestimmten Anzahl an Zeichen mit dem Erwartungswert für dieses Datenfeld in der Auswerteeinheit vollzogen. Für den Fall, dass die Anzahl der Zeichen den Erwartungswert überschreitet, wird ein Prüfungssignal erzeugt. Das Prüfungssignal wird zur Erzeugung eines Signaltons oder eines optischen Warnhinweises verwendet, insbesondere um den Nutzer auf eine mögliche Fälschung hinzuweisen.

Identifikationsdokumente, für die das erfindungsgemäße Verfahren Anwendung finden kann, umfassen insbesondere Reisepässe, Personalausweise, Führerscheine, Zugangskontrollausweise oder andere ID-Karten, Fahrzeugscheine, Fahrzeugbriefe, Visa, Scheck-, Bank-, Kredit- oder Barzahlungskarten, Kundenkarten, Gesundheitskarten, Chipkarten, Firmenausweise, Berechtigungsnachweise, Mitgliedsausweise, Geschenk- oder Einkaufsgutscheine und Urkunden.

In einer weiteren Ausführungsform wird erwogen, dass der Erwartungswert von einem unter rein sichtbarem Licht, d. h. ohne IR-Lichtanteile, beispielsweise Tageslicht, erscheinen dem Erscheinungsbild abweicht. Mit anderen Worten ist in diesem Falle das Original der Datenfelder mit IR-absorbierenden Daten erhalten, die Fälschung wurde allerdings mit herkömmlichen Farbstoffen und/oder Pigmenten vorgenommen.

Es liegt mit anderen Worten keine doppelte Personalisierung unter Verwendung IRabsorbierender Farbstoffe und/oder Pigmente vor, sondern eine abweichende Personalisierung.

Gemäß Ausführungsformen der Erfindung kann somit eine Doppelung der Daten (d. h. Fälschung) entweder unter ausschließlicher Verwendung von IR-Licht erkannt werden, oder unter Abgleich der erfassten Daten unter Verwendung von IR-Licht einerseits mit den erfassten Daten unter Verwendung von rein sichtbaren Licht andererseits.

Bei Nicht-Übereinstimmung der Daten die einerseits mit IR-Licht, andererseits mit sichtbarem Licht erfasst wurden, wird schließlich das Prüfsignal ausgegeben, das insbesondere eine Anforderung an einen Bediener beinhalten kann, eine eingehendere Prüfung des untersuchten Dokuments vorzunehmen oder zu veranlassen.

Ein weiterer Aspekt der Erfindung liegt in der Bereitstellung eines Computerprogramms, das es einer Datenverarbeitungsanlage ermöglicht, nachdem es in ein Speichermittel der Datenverarbeitungsanlage geladen worden ist, das zuvor geschilderte Verfahren zur Fälschungserkennung von Identifikationsdokumenten durchzuführen.

Ferner betrifft die Erfindung ein computerlesbares Speichermedium, auf dem ein Programm gespeichert ist, dass es einer Datenverarbeitungsanlage ermöglicht, nachdem es in ein Speichermittel der Datenverarbeitungsanlage geladen worden ist, das zuvor geschilderte Verfahren zur Fälschungserkennung von Identifikationsdokumenten durchzuführen.

Weitere bevorzugte Ausführungsformen lassen sich der nachfolgenden Beschreibung entnehmen.

### Kurzbeschreibung der Figuren

Die Erfindung wird nachfolgend anhand eines Ausführungsbeispiels und dazugehöriger Zeichnungen näher erläutert. Die Figuren zeigen:
- Fig. 1: eine schematische Darstellung eines Identifikationsdokuments mit zwei Datenfeldern
- Fig. 2: eine schematische Darstellung des erfindungsgemäßen Verfahrensablaufs zur Fälschungserkennung

### Detaillierte Beschreibung der Erfindung

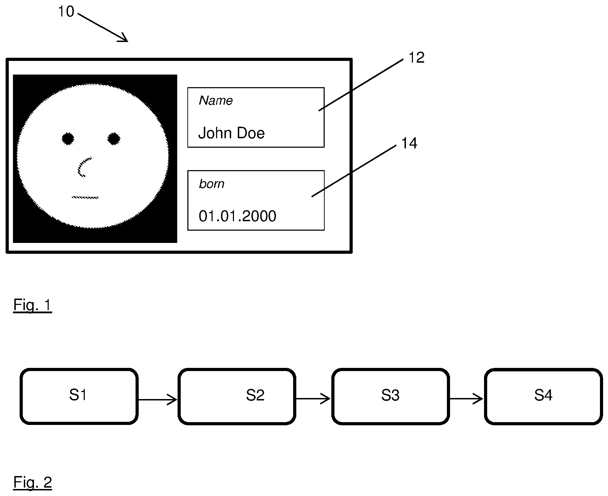

Figur 1 ist ein Identifikationsdokument 10 zu entnehmen, das zwei für das erfindungsgemäße Verfahren beispielhafte Datenfelder enthält. In einem ersten Datenfeld 12 ist ein Name, hier John Doe, abgelegt. Ein zweites Datenfeld 14 enthält ein Datum, nämlich das Geburtsdatum 01.01.2000. Die Daten der Datenfelder 12, 14 sind sichtbar, als auch unter Infrarotlicht lesbar eingebracht, also beispielsweise als Echtschwarzelemente in das Identifikationsdokument 10 integriert.

Nachfolgend wird in Figur 2 beschrieben, wie mit Hilfe des erfindungsgemäßen Verfahrens zur Fälschungserkennung von Identifikationsdokumenten, die Datenfelder mit IR-absorbierenden personalisierten Daten enthalten, eine Überprüfung stattfinden kann.

Im Schritt S1 werden dazu die Datenfelder 12, 14 mit Hilfe eines hier nicht dargestellten IR-Lesegerätes ausgelesen und in digitalisierten Form für eine Auswerteeinheit bereitgestellt.

Die ausgelesenen Datenfelder werden anschließend mit einer herkömmlichen Texterkennung derart ausgewertet, dass eine Anzahl alphanumerischer Zeichen bestimmt wird (Schritt S2).

Im Schritt S3 wird für das Datenfeld 12 mit Hilfe der Texterkennung zudem die Gesamtlänge des ausgelesenen Datenfeldes bestimmen; die Länge entspricht dabei der Strecke vom Anfangsbuchstaben J hin zum Endbuchstaben e. Falls noch unbekannt und nicht in der Auswerteeinheit hinterlegt, kann mit der Texterkennung ferner die Zeichengröße des Schrifttyps ermittelt werden, also zum Beispiel der Schriftartentyp Arial 11 erkannt werden. Mit bekannter Zeichengröße und Länge des Datenfeldes kann nun in einfacher Weise bestimmt werden, wie viele Zeichen maximal vorhanden sein sollten. Sofern es sich bei dem Schriftzug "John Doe" um ein Original handelt, sollten maximal 8 Zeichen vorhanden sein. Dementsprechend wäre der Erwartungswert des Datenfeldes 12 auf 8 festzulegen.

Für den Fall, dass der dargestellte Schriftzug "John Doe" nachträglich aufgeklebt oder aufgedruckt wurde, würden nun beim Auslesen der IR-Daten neben den 7 Buchstaben des falschen Datensatzes "John Doe" noch weitere Buchstaben des originalen Namens erscheinen. Dementsprechend wäre die bestimmte Anzahl der alphanumerischen Zeichen im ausgelesen Datenfeld höher als die des Erwartungswertes 8. Im Schritt S4 würde in einem solchen Fall dann ein Prüfsignal erzeugt werden, das weitere Kontrollmechanismen in Gang setzt oder zur Ausgabe eines Warnsignals oder dergleichen führt.

Für das Datenfeld 14 ist die Festlegung des Erwartungswertes vereinfacht, da es sich um ein Datumsfeld handelt. Die Datumsangabe ist in der Regel genormt und beinhaltet zwei Stellen für die Tagesangabe, zwei Stellen für die Monatsangabe und eine vierstellige Jahreszahl, so dass insgesamt 8 Ziffern vorhanden sein müssen. Der Erwartungswert wäre also 8 und kann für Datumsfelder unabhängig von der Länge des Datenfeldes oder Zeichengröße vorgegeben werden (Schritt S3).

Im Fall einer Fälschung durch Überkleben oder Überdrucken werden in der Regel weitere Ziffern zu erkennen sein, so dass die Anzahl der bestimmten alphanumerischen Zeichen im ausgelesenen Datenfeld den Erwartungswert übersteigt. Dementsprechend wird wiederum ein Prüfsignal erzeugt werden (Schritt S4).

### Bezugszeichenliste

- 10: Identifikationsdokument
- 12, 14: Datenfelder

## Patentansprüche

1. Verfahren zur Fälschungserkennung von Identifikationsdokumenten, die Datenfelder mit IR-absorbierenden personalisierten Daten enthalten, umfassend die Schritte:
(i) Auslesen eines Datenfeldes, das einen IR-absorbierenden personalisierten Datensatz enthält, mit einem IR-Lesegerät;
(ii) Bestimmen einer Anzahl alphanumerischer Zeichen im ausgelesenen Datenfeld in einer Auswerteeinheit; und
(iii) Bereitstellen eines Erwartungswerts für das Datenfeld, das den IR-absorbierenden personalisierten Datensatz enthält, in der Auswerteeinheit, wobei
- der Erwartungswert in Abhängigkeit von einer vorgegebenen Anzahl an Zeichen, die im Datenfeld zu erwarten sind, festgelegt ist oder
- zusätzlich eine Länge des ausgelesenen Datenfeldes bestimmt wird und anhand der Länge und einer vorgegebenen durchschnittlichen Zeichengröße eine maximale Anzahl an Zeichen berechnet wird, die im Datenfeld zu erwarten sind, und der Erwartungswert in Abhängigkeit von der berechneten maximalen Anzahl der Zeichen festgelegt ist;
(iv) Vergleich der bestimmten Anzahl an Zeichen mit dem Erwartungswert für dieses Datenfeld in der Auswerteeinheit und, für den Fall, dass die Anzahl der Zeichen den Erwartungswert überschreitet, Erzeugen eines Prüfsignals,
wobei die IR-absorbierenden personalisierten Daten mittels einer IR-absorbierende Pigmente enthaltenen Tinte oder mittels einer IR-absorbierende schwarze Rußpartikel erzeugenden Laserbestrahlung abgelegt sind,
wobei das Prüfsignal zur Erzeugung eines Signaltons oder eines optischen Warnhinweises verwendet wird.

2. Verfahren nach Anspruch 1, bei dem das auszulesende Datenfeld ein Datumsfeld ist und der festgelegte Erwartungswert aus Schritt (iii) 8 ist.

3. Verfahren nach Anspruch 1, bei dem das Datenfeld ein Namensfeld ist und der anhand der Länge und der vorgegebenen durchschnittlichen Zeichengröße des Datensatzes berechnete Erwartungswert aus Schritt (iii) der maximalen Anzahl an Zeichen entspricht.

4. Computerprogramm, das es einer Datenverarbeitungsanlage ermöglicht, nachdem es in ein Speichermittel der Datenverarbeitungsanlage geladen worden ist, ein Verfahren zur Fälschungserkennung von Identifikationsdokumenten gemäß einem der vorhergehenden Ansprüche durchzuführen.

5. Computerlesbares Speichermedium, auf dem ein Programm gespeichert ist, dass es einer Datenverarbeitungsanlage ermöglicht, nachdem es in ein Speichermittel der Datenverarbeitungsanlage geladen worden ist, ein Verfahren zur Fälschungserkennung von Identifikationsdokumenten gemäß einem der Ansprüche 1 bis 3 durchzuführen.

## Claims

1. A method for forgery detection in identification documents containing data fields with IR-absorbing personalized data, comprising the following steps:
(i) reading a data field that contains an IR-absorbing personalized data set with an IR reader;
(ii) determining a number of alphanumeric characters in the read data field in an evaluation unit; and
(iii) providing an expected value for the data field containing the IR-absorbing personalized data set in the evaluation unit, wherein
- the expected value is set based on a predefined number of characters expected in the data field, or
- in addition, a length of the read data field is determined and a maximum number of characters is calculated based on the length and a predefined average character size, which is to be expected in the data field, and the expected value is determined based on the calculated maximum number of characters;
(iv) comparing the determined number of characters with the expected value for this data field in the evaluation unit and, in the event that the number of characters exceeds the expected value, generating a test signal,
wherein the IR-absorbing personalized data is stored by means of an ink containing IR-absorbing pigments or by means of laser irradiation generating IR-absorbing black soot particles,
wherein the test signal is used to produce a signal sound or an optical warning indication.

2. The method according to claim 1, wherein the data field to be read is a date field and the predefined expected value from step (iii) is 8.

3. The method according to claim 1, wherein the data field is a name field and the expected value calculated from the length and the predefined average character size of the data set from step (iii) corresponds to the maximum number of characters.

4. A computer program that enables a data processing system, after it has been loaded into a memory of the data processing system, to perform a method for forgery detection in identification documents according to any one of the preceding claims.

5. A computer-readable storage medium on which a program is stored that enables a data processing system, after it has been loaded into a memory of the data processing system, to perform a method for forgery detection in identification documents according to any one of claims 1 to 3.

## Revendications

1. Procédé de détection de falsification de documents d'identification contenant des champs de données avec des données personnalisées absorbant l'IR, comprenant les étapes de :
(i) lecture d'un champ de données contenant un ensemble de données personnalisées absorbant l'IR avec un lecteur IR ;
(ii) détermination d'un nombre de caractères alphanumériques dans le champ de données lu dans une unité d'évaluation ; et
(iii) fourniture d'une valeur escomptée pour le champ de données, qui contient l'ensemble de données personnalisées absorbant l'IR dans l'unité d'évaluation, dans lequel
- la valeur escomptée est déterminée en fonction d'un nombre prescrit de caractères, qui sont escomptés dans le champ de données ou
- une longueur du champ de données lu est en outre déterminée et, sur la base de la longueur et d'une taille moyenne prescrite de caractères, un nombre maximal de caractères escomptés dans le champ de données est calculé, et la valeur escomptée est déterminée en fonction du nombre maximal de caractères calculé ;
(iv) comparaison du nombre spécifique de caractères avec la valeur escomptée pour ce champ de données dans l'unité d'évaluation et, dans le cas où le nombre de caractères dépasse la valeur escomptée, génération d'un signal de test,
dans lequel les données personnalisées absorbant l'IR sont enregistrées en utilisant une encre absorbant l'IR contenant des pigments ou au moyen d'une irradiation laser qui génère des particules de suie noire absorbant l'IR, dans lequel le signal de test est utilisé pour générer un signal sonore ou un avertissement optique.

2. Procédé selon la revendication 1, dans lequel le champ de données à lire est un champ de date et la valeur escomptée déterminée de l'étape (iii) est 8.

3. Procédé selon la revendication 1, dans lequel le champ de données est un champ de nom et la valeur escomptée de l'étape (iii) calculée sur la base de la longueur et de la taille moyenne prescrite des caractères de l'ensemble de données correspond au nombre maximal de caractères.

4. Programme informatique, qui permet à un système informatique, après son chargement dans un moyen de stockage du système informatique, d'exécuter un procédé de détection de falsification de documents d'identification selon une des revendications précédentes.

5. Support de mémorisation lisible par ordinateur sur lequel est mémorisé un programme qui permet à un système de traitement de données, après avoir été chargé dans un support de mémorisation du système de traitement de données, d'exécuter un procédé de détection de falsification de documents d'identification selon une des revendications 1 à 3.
